# EUROPEAN PATENT SPECIFICATION

(11) **EP 3 461 636 B1**
(45) Date of publication and mention of the grant of the patent: **19.05.2021**
(21) Application number: 17194079.4
(22) Date of filing: 29.09.2017
(51) Int. Cl.: B32B 17/10

(54) **LAMINATED HOLOGRAPHIC DISPLAY AND MANUFACTURING THEREOF**
LAMINIERTES HOLOGRAPHISCHES DISPLAY UND HERSTELLUNG DAVON
AFFICHAGE HOLOGRAPHIQUE STRATIFIÉ ET SON PROCÉDÉ DE FABRICATION

(43) Date of publication of application: 03.04.2019
(73) Proprietor: Wayray AG, 8052 Zurich (CH)
(72) Inventor: POPKOVA, Vera Ya, 119421 Moscow (RU); VALGIN, Sergey V., 600020 Vladimir (RU); ZHIGALOV, Vladimir G., 600007 Vladimir (RU); PONOMAREV, Vitaly A., 6313 Menzingen (CH)
(74) Representative: Wittmann, Günther

(56) References cited:
- EP-A2- 0 407 772
- EP-A2- 0 407 772
- US-A- 5 282 066
- US-A- 5 335 099
- US-A1- 2017 068 095

## Description

The present disclosure relates to a laminated holographic display and to a method of producing a laminated holographic display, wherein the laminated holographic display in particular is integrated in a windshield, in a head-up display (HUD), in a smart glass (SG) or in an augmented reality (AR) system.

### BACKGROUND

A holographic display is commonly used in a variety of applications, and may be integrated in a windshield, in particular in a vehicle, airplane or boat windshield, in a head-up display (HUD), in a smart glass (SG) or in an augmented reality (AR) system. A holographic display is designed to display a hologram, which can be seen by the operator of the holographic display in a three-dimensional shape. The hologram, which is displayed by the holographic display, provides a plurality of information, which can be effectively perceived by the operator within his field of view. Therefore, the operator does not have to turn his head to monitor various control elements during operation of the vehicle, airplane or boat.

In US 5,335,099 A, a vehicle windshield with a zero-degree mirror reflection hologram is disclosed. The windshield includes an inner glass layer, a zero-degree mirror hologram layer directly attached to the inner glass layer, an optical adhesive layer, a PVB layer and an outer glass layer.

In US 5,859,714 A, a head-up display for displaying driving information to an operator in a vehicle, a combiner used for the same and a method of designing the head-up display is disclosed. The windshield comprises a reflection type hologram directly attached to a cabin side glass, and comprises an outside glass, together with an inner layer composed of PVB to form a safety laminated glass.

In US 2015/0138627 A1, a projection or back-projection method is disclosed, according to which a glazing comprising a transparent layered element having diffuse reflection properties is used as projection or back-projection screen. The glazing comprises the following stack, a lower rough glass layer, a central steel layer, an upper sol-gel layer, a thermo-formable plastic layer, a light-scattering system comprising a functional film, an upper additional layer, another top glass layer.

In EP 0 407 772 B1, a process for altering the wavelength response of a volume phase hologram is disclosed. A photopolymerizable layer is mounted on a glass plate and is protected by a polyethylene terephthalate film support, wherein the film element can comprise a polymeric binder selected from PVB.

In EP 2 848 595 A1, a laminated glass used in the windshields of cars is disclosed. The laminated glass includes at least two sheets of glass plates laminated together with an intermediate layer disposed there between, wherein the intermediate layer is formed by sandwiching an optical film containing an infrared reflecting layer on a transparent film between two sheets of intermediate films containing a thermoplastic resin.

In US 2017/068095 A1 systems, articles, and methods related to integrating photopolymer film with an eyeglass lens for use as a holographic optical element in a wearable heads-up display are disclosed.

In US 5,335,099 A a zero-degree mirror reflection hologram, which is embedded into a vehicle windshield to reduce veiling glare is disclosed.

In EP 0 407 772 A2 a process for forming a reflection hologram in a substantially solid, transparent, photosensitive film is disclosed.

In US 5,282,066 A multiple layers or holographic exposures and methods for preparing multiple layers of holographic exposures are described.

However, such holographic displays have to be integrated into glass structures to be available to the operators, and therefore laminated holographic displays have to be manufactured. However, when manufacturing laminated holographic displays, the optical properties of the hologram, such as a hologram resolution, hologram diffraction efficiency and/or hologram color, can be adversely affected during the lamination process (see, for example J. Opt. 29 (1998) 95-103; US 9,261,778 B2).

### SUMMARY

It is therefore an object of the present disclosure to provide laminated holographic displays, which are configured to display holograms with advantageous optical properties.

This object is achieved by way of the features of the independent patent claims. Advantageous developments are the subject matter of the dependent claims, the description and the appended figures.

The present disclosure is based on the finding that the above object can be achieved by performing the providing step and the lamination step during manufacturing of the laminated holographic display in the absence of ambient light. During production of the laminated holographic displays, the optical properties of the holograms displayed by said displays can be significantly improved when the providing step and the lamination step, which are performed before recording the hologram, are performed in the absence of ambient light.

According to a first aspect, the present disclosure relates to a method for producing a laminated holographic display comprising the following steps; providing a display precursor, wherein the display precursor comprises a first glass layer, a second glass layer, an unrecorded photopolymer film layer, which is arranged between the first glass layer and the second glass layer, and a polymer film layer, which is arranged between the unrecorded photopolymer film layer and the second glass layer, wherein the providing step is performed in the absence of ambient light; laminating the display precursor to obtain a display laminate, wherein the laminating step is performed in the absence of ambient light; and recording a hologram in the display laminate by applying a light beam to the unrecorded photopolymer film layer of the display laminate to obtain a recorded photopolymer film layer comprising the hologram, wherein the recording step is performed in the absence of ambient light.

As a result of the method according to the present disclosure, a laminated holographic display can be produced, wherein the hologram displayed by the recorded photopolymer film layer exhibits superior optical properties, such as high optical resolution, advanced optical diffraction properties, defined wavelength, true color properties and/or the absence of an "orange peel" effect in the hologram.

During conventional lamination processes performed during the manufacture of conventional laminated holographic displays, lamination is typically performed after recording of the hologram. Therefore, due to the high pressure and elevated temperature occurring during the lamination and diffusion processes, the optical properties of the recorded hologram can be negatively affected.

Therefore, in the method according to the present disclosure, the lamination step is performed before recording of the hologram in the photopolymer film layer, so that the conditions during the lamination step have no effect on the hologram itself. However, to protect the unrecorded photopolymer film layer during the lamination process, the providing and lamination steps are performed in the absence of ambient light. Thereby, it is ensured that a superior hologram can be recorded in the unrecorded photopolymer film layer during the recording step, which is performed after the lamination step.

The recording of the hologram is also performed in the absence of ambient light, by applying a light beam to the unrecorded photopolymer film layer of the display laminate after the lamination step, resulting in the formation of the hologram within the recorded photopolymer film layer.

The light beam can be a laser light beam, emitting coherent and monochromatic laser light when recording the hologram. The absence of ambient light during recording of the hologram is important to ensure that the interference pattern, which is recorded in the photopolymer film layer, only comprises wave information, which is derived from the object, the hologram is based on, and to ensure that no unrelated wave information is integrated into the interference pattern, thereby ensuring the optical quality of the hologram.

In particular during the recording step of the hologram, the coherent and monochromatic laser beam is split into an illumination beam and a reference beam by a beam splitter. The reference beam is directly applied to the unrecorded photopolymer film layer. The illumination beam is applied to the object, the hologram is based on. The illumination beam interacts with the object, thereby generating an object beam, which in turn is also applied to the unrecorded photopolymer film layer. By applying two light beams, namely the reference beam and the object beam, to the unrecorded photopolymer film layer an interference pattern can be recorded, which is correlated to the hologram, which should be displayed by the holographic display.

According to one embodiment, the laminating step is performed at a temperature from 50 °C to 130 °C and/or a pressure from 1 bar to 16 bar, and wherein the laminating step is preferably performed in an autoclave.

As a result, the temperature and pressure ranges, which can be effectively provided in an autoclave, ensure a proper lamination of the different layers of the display precursor during the lamination process.

According to the invention, the display precursor comprises an optically transparent adhesive layer, which is arranged between the photopolymer film layer and the first glass layer, wherein the optically transparent adhesive layer preferably comprises silicone-based adhesive, and wherein the thickness of the optically transparent adhesive layer is more preferably from 20 µm to 50 µm.

As a result, the optically transparent adhesive layer ensures a stable connection between the photopolymer film layer and the first glass layer. Due to the optically transparent properties of the optically transparent adhesive layer, light can pass through the adhesive layer, thereby enabling a proper recording or viewing of the hologram.

According to the invention, the display precursor comprises an additional polymer film layer, which is arranged between the photopolymer film layer and the first glass layer. The additional polymer film layer may be an adhesive layer.

As a result, beside the polymer film layer, which is arranged between the photopolymer film layer and the second glass layer, the additional polymer film layer, arranged between the photopolymer film layer and the first glass layer, effectively enclose the photopolymer film layer, thereby protecting the photopolymer film layer from chemical and mechanical damage.

According to one embodiment, the at least one polymer film layer comprises polyvinyl butyral (PVB), ethylene vinyl acetate (EVA) and/or polyurethane (PU), wherein the thickness of the at least one polymer film layer is preferably from 380 µm to 1500 µm, more preferably from 380 µm to 760 µm.

As a result, polyvinyl butyral, ethylene vinyl acetate and/or polyurethane ensure efficient mechanical and chemical properties of the polymer film layer and/or of the additional polymer film layer. In particular, polyvinyl butyral, ethylene vinyl acetate and/or polyurethane can display optically transparent properties, so that light can pass through the polymer film layers thereby enabling a proper recording or viewing of the hologram.

According to one embodiment, the photopolymer film layer comprises a photopolymer film and a substrate layer, wherein the substrate layer is arranged between the polymer film layer and the photopolymer film.

As a result, the substrate layer of the photopolymer film layer ensures that the photopolymer film is effectively embedded within the photopolymer film layer.

According to one embodiment, the photopolymer film layer comprises an additional substrate layer, wherein the additional substrate layer is arranged between the photopolymer film and the additional polymer layer.

As a result, the photopolymer film is effectively enclosed within the photopolymer film layer. The substrate layer is arranged between the photopolymer film and the polymer layer, and the additional substrate layer is arranged between the photopolymer film and the additional polymer layer.

According to one embodiment, the substrate layer and/or additional substrate layer comprise polyamide (PA), cellulose triacetate (TAC) and/or polyethylene terephthalate (PET), preferably polyamide (PA), and the photopolymer film preferably comprises cross-linked polyurethane (PU).

As a result, the polyamide, cellulose triacetate and/or polyethylene terephthalate layers provide an efficient stabilization of the photopolymer film. When the photopolymer film comprises cross-linked polyurethane, an efficient recording of an interference pattern in the photopolymer film can be ensured. Preferably, the photopolymer film is a Bayfor ® HX photopolymer film.

According to one embodiment, the thickness of the substrate layer and/or the additional substrate layer is from 35 µm to 60 µm, preferably 60 µm, and/or the thickness of the photopolymer film is from 8 µm to 18 µm, preferably 15 µm.

As a result, the claimed substrate thickness and claimed photopolymer film thickness allow for an efficient recording of the hologram in the photopolymer film, while also ensuring mechanical stability of the photopolymer film layer.

According to one embodiment, the laminated holographic display is integrated in a windshield, preferably vehicle, aircraft or boat windshield, in a head-up display (HUD), preferably vehicle, aircraft or boat head up display (HUD), a smart glass (SG) or in an augmented reality (AR) system.

As a result, the laminated holographic display can be effectively used in a variety of applications to instantly and simply provide information to the operator of the laminated holographic display.

According to one embodiment, the laminating step is performed in an autoclave, wherein the method comprises the additional method step, darkening the interior of the autoclave before the laminating step to perform the laminating step in the absence of ambient light.

As a result, by effectively darkening the interior of the autoclave before the lamination step, it can be prevented that ambient light originating from the exterior of the autoclave enters the interior of the autoclave during the lamination step. In particular, the darkening of the interior of the autoclave can include sealing off any openings in the autoclave body, through which ambient light could enter the interior of the autoclave. Alternatively or additionally, darkening of the interior of the autoclave can also include switching off any ambient light sources in proximity to the autoclave, for example to switch off all external lights in the room, wherein the autoclave is present.

According to one embodiment, during the lamination step the illuminance of ambient light at the display precursor is below 0.5 lux, preferably below 0.05 lux, more preferably below 0.005 lux and/or during the recording step the illuminance of ambient light at the display laminate is below 0.5 lux, preferably below 0.05 lux, more preferably below 0.005 lux.

As a result, the reduced illuminance of ambient light at the display precursor during the lamination step and/or the reduced illuminance of ambient light at the display laminate during the recording step protect the photopolymer film from being altered. This allows for an efficient recording of the hologram in the photopolymer film during the recording step, since the illuminance of ambient light, measured at the display laminate is sufficiently low to prevent any alteration of the optical properties of the hologram to be recorded.

According to one embodiment, the method comprises an additional method step, applying a first coating on an external surface of the first glass layer and/or applying a second coating on an external surface of the second glass layer, wherein the additional method step is performed after the recording step, wherein the first coating and/or second coating preferably comprises polyethylene terephthalate (PET) and/or polycarbonate (PC), wherein the first coating and/or second coating more preferably is applied during a lamination procedure at a temperature from 10 °C to 130 °C in an autoclave or wherein the first coating and/or second coating more preferably is applied during a lamination procedure at a temperature from 10 °C to 50 °C without an autoclave.

As a result, the first and/or second coating applied to the external surface of the first and/or second glass layer protect said glass layers from mechanical and chemical damage. During the lamination procedure, the laminated holographic display, comprising the hologram recorded in the photopolymer film layer, is laminated again in an autoclave at a temperature from 10 °C to 130 °C, or is laminated without an autoclave at a temperature from 10 °C to 50 °C depending on the coating materials, wherein the recorded hologram is not damaged during said subsequent lamination procedure.

According to a second aspect, the present disclosure relates to a laminated holographic display obtainable by a method according to the first aspect.

As a result, the laminated holographic display displaying the hologram comprises efficient optical properties for the operator to perceive the hologram.

The subject matter of the embodiments related to the method for producing a laminated holographic display according to the first aspect of the present disclosure should be herewith also included as embodiments related to the laminated holographic display obtainable by a method according to the second aspect.

According to a third aspect, the present disclosure relates to a laminated holographic display comprising; a first glass layer; a second glass layer; a recorded photopolymer film layer comprising a hologram, wherein the recorded photopolymer film layer is arranged between the first glass layer and the second glass layer; a polymer film layer, which is arranged between the recorded photopolymer film layer and the second glass layer; and an additional film layer, which is arranged between the recorded photopolymer film layer and the first glass layer.

As a result, the laminated holographic display displaying the hologram comprises efficient optical properties for the operator to perceive the hologram.

The subject matter of the embodiments related to the method for producing a laminated holographic display according to the first aspect of the present disclosure should be herewith also included as embodiments related to the laminated holographic display according to the third aspect.

According to one embodiment the additional film layer is an optically transparent adhesive layer, preferably a silicone-based optically transparent adhesive layer or an additional polymer film layer, preferably comprising polyvinyl butyral (PVB), ethylene vinyl acetate (EVA) and/or polyurethane (PU).

As a result, the additional film layer being either an optically transparent adhesive layer or an additional polymer film layer allows for an efficient manufacture of the laminated holographic display.

### BRIEF DESCRIPTION OF THE DRAWINGS

Further embodiments of the principles and techniques of that disclosure are explained in greater detail with reference to the appended drawings, in which:
Fig. 1 shows a schematic representation of a laminated holographic display in a vehicle windshield;
Fig. 2 shows a schematic representation of a laminated holographic display according to a first embodiment;
Fig. 3 shows a schematic representation of a laminated holographic display according to a second embodiment; and
Fig. 4 shows a schematic representation of a method for producing a laminated holographic display according to the first or second embodiment.

### DETAILED DESCRIPTION OF THE DRAWINGS

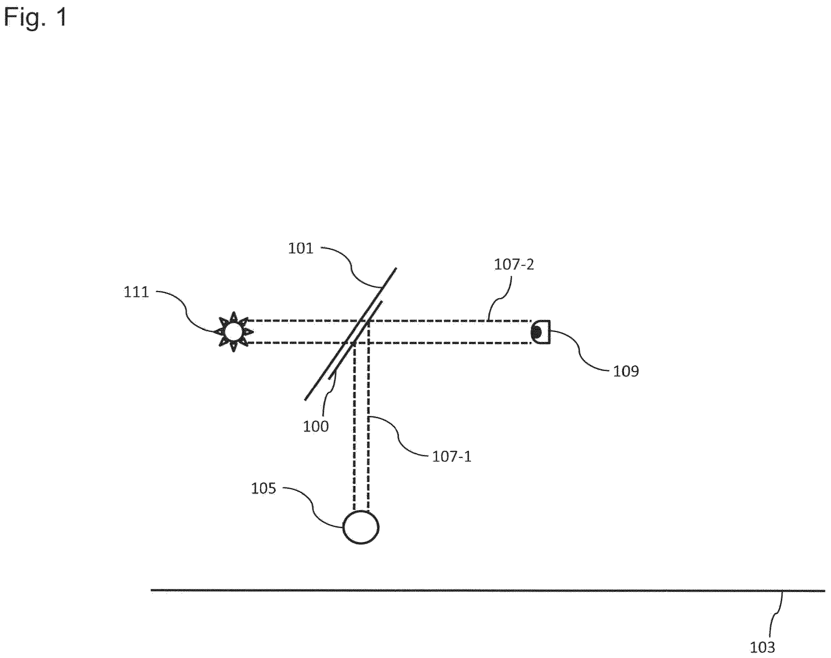

Figure 1 shows a schematic representation of a laminated holographic display in a vehicle windshield.

The integration of holograms in glass and/or windshields enables the generation of holographic optical elements (HOE) for the use in smart glasses (SG), augmented reality (AR) systems and head-up displays (HUD) in vehicles, planes or boats.

The laminated holographic display 100 is integrated in a vehicle windshield 101 of a vehicle 103, e.g. an automobile, wherein the vehicle 103 is only schematically depicted in Fig. 1. A light element 105 emits light 107-1, which is diffracted by the laminated holographic display 100 to generate diffracted light 107-2 thereby generating a hologram 111, which is perceived by the operator 109 of the vehicle 103.

In particular, the light element 105 comprises a coherent light source to emit monochromatic light 107-1, a lens system used as a collimator and/or display components, such DLP, LCD and/or LCoS, to modify the optical properties of the light 107-1 emitted by the light element 105.

The light element 105 can be configured to comprise a laser generator emitting coherent and monochromatic laser light 107-1 or can be configured to comprise hot cathode ray tube to emit coherent and monochromatic light 107-1.

The laminated holographic display 100 is functioning as an optical element, such as a spherical mirror, at the desired wavelength and is configured to display a hologram 111 at a certain wavelength, while the laminated holographic display 100 is transparent to the rest of the visible spectrum of the emitted light 107-1.

When reconstructing the hologram 111 according to the embodiment depicted in Fig. 1, it is important that the optical properties of the light 107-1 emitted by the light element 105 are identical to the optical properties of the recording light, which was used when an interference pattern has been recorded in the laminated holographic display 100 before. The interference pattern is correlated to the hologram 111 displayed by the laminated holographic display 100.

Accordingly, coherent and monochromatic light 107-1 of said specific optical properties is directed to the laminated holographic display 100, wherein the light 107-1 is diffracted by the interference pattern, which has been recorded in the laminated holographic display 100, towards the operator 109 of the vehicle 103. The diffracted light 107-2 comprises the optical properties of the object, which was recorded in the laminated holographic display 100 thereby generating the hologram 111, which is perceived by the operator 109 in the windshield 101.

Since the interference pattern recorded in the laminated holographic display 100 also comprises optical information in respect to the space in front and behind the recorded object, the hologram 111 displayed by the laminated holographic display 100 can be viewed by the operator 109 from different angles thereby generating a three-dimensional impression of the hologram 111.

The laminated holographic display 100 is configured to display a color hologram 111 in particular a true color hologram 111. In particular, the laminated holographic display 100 is configured to display a plurality of holograms 111, wherein the plurality of holograms 111 can comprise different colors. According to Fig. 1, the hologram 111 displayed by the laminated holographic display 100 is a transmission hologram 111, however the scope of the present disclosure also comprises reflection holograms 111.

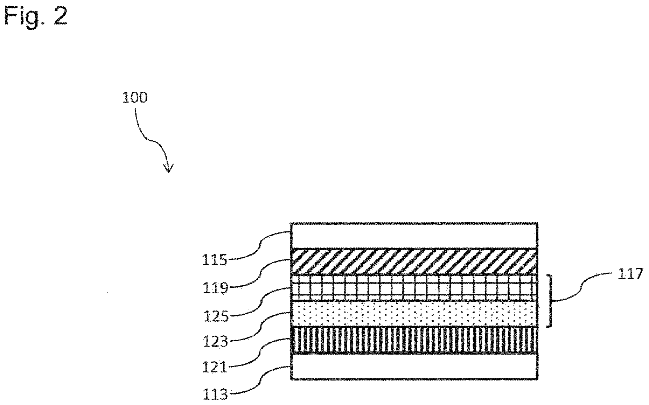

Figure 2 shows a schematic representation of a laminated holographic display according to a first embodiment. The laminated holographic display 100 comprises a first glass layer 113 and a second glass layer 115, which delimit the laminated holographic display 100 from the exterior of the laminated holographic display 100.

Between the first and second glass layer 113, 115, a photopolymer film layer 117 is arranged. The photopolymer film layer 117 comprises an interference pattern, which is correlated to the object recorded in the laminated holographic display 100, thereby generating the hologram 111.

Between the photopolymer film layer 117 and the second glass layer 115, a polymer film layer 119 is arranged. The polymer film layer 119 comprises polyvinyl butyral (PVB), ethylene vinyl acetate (EVA) and/or polyurethane (PU). The thickness of the polymer film layer 119 is preferably from 380 µm to 1500 µm, more preferably from 380 µm to 760 µm.

Between the photopolymer film layer 117 and the first glass layer 113, an optically transparent adhesive layer 121 is arranged. The optically transparent adhesive layer 121 preferably comprises silicone-based adhesive. The thickness of the optically transparent adhesive layer 121 is more preferably from 20 µm to 50 µm.

The photopolymer film layer 117 comprises a photopolymer film 123, which displays the hologram 111 and a substrate layer 125, wherein the substrate layer 125 is arranged between the polymer film layer 119 and the photopolymer film 123.

In particular, the substrate layer 125 comprises polyamide (PA), cellulose triacetate (TAC) and/or polyethylene terephthalate (PET), preferably polyamide (PA). In particular, the thickness of the substrate layer 125 is from 35 µm to 60 µm, preferably 60 µm.

In particular the photopolymer film 123 comprises cross-linked polyurethane (PU) derivatives. In particular, the thickness of the photopolymer film 123 is from 8 µm to 18 µm, preferably 15 µm.

Summarizing, the 6-layered sandwiched structure of the laminated holographic display 100 according to the first embodiment comprises the following consecutive order of film layers: the first glass layer 113, the optically transparent adhesive layer 121, the photopolymer film 123, which displays the hologram 111, the substrate layer 125, the polymer film layer 119 and the second glass layer 115.

Even if not depicted in Fig. 2 a first coating can be applied on an external surface of the first glass layer 113 and/or a second coating can be applied on an external surface of the second glass layer 115. The first coating and/or second coating preferably comprise polyethylene terephthalate (PET) and/or polycarbonate (PC).

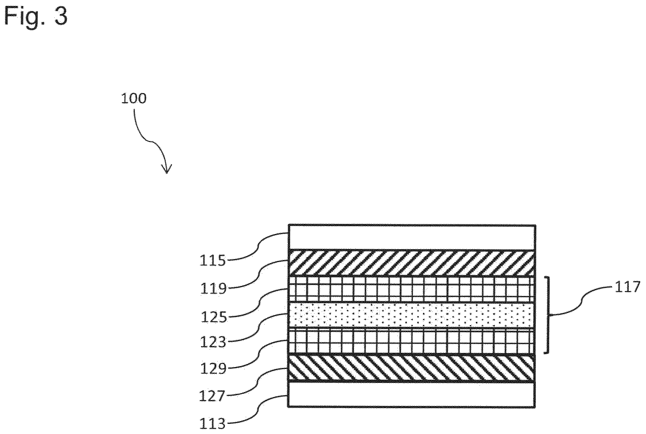

Figure 3 shows a schematic representation of a laminated holographic display according to a second embodiment. Similar to the laminated holographic display 100 according to the first embodiment, the laminated holographic display 100 according to the second embodiment comprises a first glass layer 113 and a second glass layer 115, and a photopolymer film layer 117, which is arranged between the first and second glass layer 113, 115, wherein the photopolymer film layer 117 comprises an interference pattern, which is correlated to the object recorded in the laminated holographic display 100, thereby generating the hologram 111.

Between the photopolymer film layer 117 and the second glass layer 115, a polymer film layer 119 is arranged.

Instead of the optically transparent adhesive layer 121 in the laminated holographic display 100 according to the first embodiment, the laminated holographic display 100 according the second embodiment depicted in Fig. 2 comprises an additional polymer film layer 127, which is arranged between the photopolymer film layer 117 and the first glass layer 113.

An additional polymer film layer 127 comprises polyvinyl butyral (PVB), ethylene vinyl acetate (EVA) and/or polyurethane (PU). The thickness of the additional polymer film layer 127 is preferably from 380 µm to 1500 µm, more preferably from 380 µm to 760 µm.

The photopolymer film layer 117 comprises a photopolymer film 123, which displays the hologram 111. In particular the photopolymer film 123 comprises cross-linked polyurethane (PU) derivatives. In particular, the thickness of the photopolymer film 123 is from 8 µm to 18 µm, preferably 15 µm.

In addition to the substrate layer 125 in the laminated holographic display 100 according to the first embodiment, the laminated holographic display 100 according to the second embodiment depicted in Fig. 3 comprises an additional substrate layer 129, wherein the additional substrate layer 129 is arranged between the photopolymer film 123 and the additional polymer film layer 127.

In particular, the substrate layer 125 and the additional substrate layer 129 comprise polyamide (PA), cellulose triacetate (TAC) and/or polyethylene terephthalate (PET), preferably polyamide (PA). In particular, the thickness of the substrate layer 125 and the additional substrate layer 129 is from 35 µm to 60 µm, preferably 60 µm.

Summarizing, the 7-layered sandwiched structure of the laminated holographic display 100 according to the second embodiment comprises the following consecutive order of film layers: the first glass layer 113, the additional polymer film layer 127, the additional substrate layer 129, the photopolymer film 123, which displays the hologram 111, the substrate layer 125, the polymer film layer 119 and the second glass layer 115.

Even if not depicted in Fig. 3 a first coating can be applied on an external surface of the first glass layer 113 and/or a second coating can be applied on an external surface of the second glass layer 115. The first coating and/or second coating preferably comprise polyethylene terephthalate (PET) and/or polycarbonate (PC).

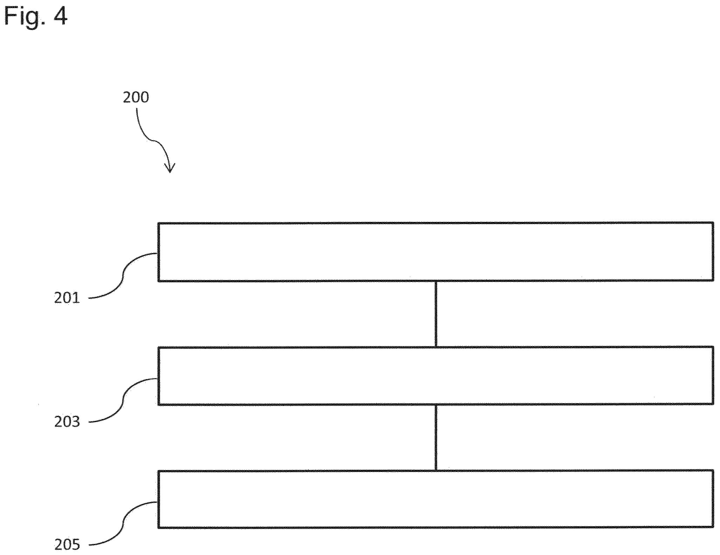

Figure 4 shows a schematic representation of a method for producing a laminated holographic display according to the first embodiment depicted in Fig. 2 or according to the second embodiment depicted in Fig 3.

Commonly used laminated holographic displays 100 are produced by providing a photopolymer film with the integrated hologram 111 together with additional film layers and subsequent lamination of the layers.

For commonly performed lamination processes, different polymeric materials are used, since holograms 111 are very sensitive to the process of diffusion and to process parameters such as high pressure and elevated temperature. During common processes of lamination, the optical properties of the hologram 111 can be diminished, which might result in a reduction of resolution and diffraction efficiency, as well as in a change in wavelength of the hologram 111.

To improve optical properties of holograms 111 used in laminated holographic displays 100, the method 200 for producing a laminated holographic display 100 according to the present disclosure comprises as a first method step, providing 201 a display precursor 100-1, wherein the providing step 201 is performed in the absence of ambient light. The display precursor 100-1 comprises various film layers as disclosed for the 6-layered structure according to the first embodiment depicted in Fig. 2, or as disclosed for the 7-layered structure according to the second embodiment depicted in Fig. 3.

It is emphasized that in the display precursor 100-1 the photopolymer film layer 117 comprises an unrecorded photopolymer film layer 117-1, wherein no hologram 111 has been recorded in the unrecorded photopolymer film layer 117-1.

The method 200 for producing a laminated holographic display 100 according to the present disclosure comprises as a subsequent second method step, laminating 203 the layers of the display precursor 100-1 to obtain a display laminate 100-2, wherein the laminating step 203 is performed in the absence of ambient light.

Due to the absence of ambient light during the lamination step 203 and also during the provision step 201, the chemical properties of the unrecorded photopolymer film layer 117-1 are maintained, which allows for a subsequent recording of a hologram 111 in the unrecorded photopolymer film layer 117-1, wherein the optical properties of the subsequently recorded hologram 111 are superior compared to a conventional lamination process of the recorded hologram performed in the presence of ambient light.

The lamination step is performed in an autoclave, preferably at a temperature from 50 °C to 130 °C, and preferably at a pressure from 1 bar to 16 bar.

To prevent light from entering the interior of autoclave during the lamination step, the method 200 comprises the additional method step, darkening the interior of the autoclave before the lamination step. By darkening the interior of the autoclave it can be ensured that the lamination process is performed in the absence of ambient light. The darkening of the interior of the autoclave is performed by sealing off any openings in the autoclave body by non-light transparent means or by switching off any external light sources in the autoclave room.

Particularly, to perform the lamination step in the absence of ambient light according to the present disclosure, the illuminance of ambient light at the display precursor 100-1 during the lamination step is preferably below 0.5 lux, more preferably below 0.05 lux and most preferably below 0.005 lux.

The method 200 for producing a laminated holographic display 100 according to the present disclosure comprises as a subsequent third method step, recording 205 a hologram 111 in the unrecorded photopolymer film layer 117-1 of the display laminate 100-2 by applying a light beam to the unrecorded photopolymer film layer 117-1 to obtain the laminated holographic display 100 comprising the hologram 111.

To allow for a superior recording of the hologram 111, the recording step 205 is also performed in the absence of ambient light, wherein in particular the illuminance of ambient light at the display laminate 100-2 during the recording step 205 is preferably below 0.5 lux, more preferably below 0.05 lux and most preferably below 0.005 lux.

To avoid exposure of the unrecorded photopolymer film layer 117-1 to ambient light between the lamination step 203 and the recording step 205, transfer of the display laminate 100-2 from the autoclave to the recording device is preferably performed in darkness, preferably in a darkened room.

The method 200 for producing a laminated holographic display 100 according to the present disclosure enables a superior recording of the hologram 111 in the photopolymer film layer 117 of the laminated holographic display 100.

The optical properties of the hologram 111 in the laminated holographic display 100, in particular the resolution, diffraction efficiency and/or color of the hologram 111, can exceed the optical properties of commonly used laminated holographic displays 100. In particular, the optical properties of the hologram 111 can even exceed the optical properties of commonly used laminated holographic displays 100. In particular no orange peel can be observed in the laminated holographic display 100 according to the present disclosure.

Optionally, the method 200 comprises an additional method step, comprising; applying a first coating on an external surface of the first glass layer 113 and/or applying a second coating on an external surface of the second glass layer 115, wherein the additional method step is performed after the recording step 205, wherein the first coating and/or second coating preferably comprises polyethylene terephthalate (PET) and/or polycarbonate (PC). More preferably the first coating and/or second coating is applied during a lamination procedure at a temperature from 10 °C to 130 °C in an autoclave or at a temperature from 10 °C to 50 °C without an autoclave. It is emphasized that the recorded hologram 111 is not altered during said final lamination procedure.

### REFERENCE NUMBERS

- 100: Laminated holographic display
- 100-1: Display precursor
- 100-2: Laminated precursor
- 101: Windshield
- 103: Vehicle
- 105: Light element
- 107-1: Emitted light
- 107-2: Diffracted light
- 109: Operator
- 111: Hologram
- 113: First glass layer
- 115: Second glass layer
- 117: Photopolymer film layer
- 117-1: Unrecorded photopolymer film layer
- 117-2: Recorded photopolymer film layer
- 119: Polymer film layer
- 121: Optically transparent adhesive layer
- 123: Photopolymer film
- 125: Substrate layer
- 127: Additional polymer film layer
- 129: Additional substrate layer
- 200: Method for producing a laminated holographic display
- 201: First method step: Providing a display precursor
- 203: Second method step: Laminating the display precursor
- 205: First method step: Recording a hologram

## Claims

1. Method (200) for producing a laminated holographic display (100) comprising the following steps:
- Providing (201) a display precursor (100-1), wherein the display precursor (100-1) comprises a first glass layer (113), a second glass layer (115), an unrecorded photopolymer film layer (117, 117-1), which is arranged between the first glass layer (113) and the second glass layer (115), and a polymer film layer (119), which is arranged between the unrecorded photopolymer film layer (117, 117-1) and the second glass layer (115), wherein the providing step (201) is performed in the absence of ambient light;
- Laminating (203) the display precursor (100-1) to obtain a display laminate (100-2), wherein the laminating step (203) is performed in the absence of ambient light; and
- Recording (205) a hologram (111) in the display laminate (100-2) by applying a light beam to the unrecorded photopolymer film layer (117, 117-1) of the display laminate (100-2) to obtain a recorded photopolymer film layer (117, 117-2) comprising the hologram (111), wherein the recording step (205) is performed in the absence of ambient light,
wherein the display precursor (100-1) comprises an additional polymer film layer (127) or optically transparent adhesive layer (121), which is arranged between the photopolymer film layer (117, 117-1, 117-2) and the first glass layer (113).

2. Method (200) according to claim 1, wherein the laminating step (203) is performed at a temperature from 50 °C to 130 °C and/or a pressure from 1 bar to 16 bar, and wherein the laminating step (203) is preferably performed in an autoclave.

3. Method (200) according to claim 1 or 2, wherein the optically transparent adhesive layer (121) comprises silicone-based adhesive, and wherein the thickness of the optically transparent adhesive layer (121) is preferably from 20 µm to 50 µm.

4. Method (200) according to any one of claims 1 to 3, wherein the at least one polymer film layer (119, 127) comprises polyvinyl butyral (PVB), ethylene vinyl acetate (EVA) and/or polyurethane (PU), and wherein the thickness of the at least one polymer film layer (119, 127) is preferably from 380 µm to 1500 µm, more preferably from 380 µm to 760 µm.

5. Method (200) according to any one of claims 1 to 4, wherein the photopolymer film layer (117, 117-1, 117-2) comprises a photopolymer film (123) and a substrate layer (125), wherein the substrate layer (125) is arranged between the polymer film layer (119) and the photopolymer film (123).

6. Method (200) according to claim 5, wherein the photopolymer film layer (117, 117-1, 117-2) comprises an additional substrate layer (129), wherein the additional substrate layer (129) is arranged between the photopolymer film (123) and the additional polymer film layer (127).

7. Method (200) according to claim 5 or 6, wherein the substrate layer (125) and/or additional substrate layer (129) comprise polyamide (PA), cellulose triacetate (TAC) and/or polyethylene terephthalate (PET), preferably polyamide (PA), and wherein the photopolymer film (123) preferably comprises cross-linked polyurethane (PU).

8. Method (200) according to any one of claims 5 to 7, wherein the thickness of the substrate layer (125) and/or the additional substrate layer (129) is from 35 µm to 60 µm, preferably 60 µm, and/or wherein the thickness of the photopolymer film (123) is from 8 µm to 18 µm, preferably 15 µm.

9. Method (200) according to any one of claims 1 to 8, wherein the laminating step (203) is performed in an autoclave, wherein the method (200) comprises the additional method step, darkening the interior of the autoclave before the laminating step (203) to perform the laminating step (203) in the absence of ambient light.

10. Method (200) according to any one of claims 1 to 9, wherein during the lamination step (203) the illuminance of ambient light at the display precursor (100-1) is below 0.5 lux, preferably below 0.05 lux, more preferably below 0.005 lux and/or wherein during the recording step (205) the illuminance of ambient light at the display laminate (100-2) is below 0.5 lux, preferably below 0.05 lux, more preferably below 0.005 lux.

11. Method (200) according to any one of claims 1 to 10, wherein method (200) comprises an additional method step, applying a first coating on an external surface of the first glass layer (113) and/or applying a second coating on an external surface of the second glass layer (115), wherein the additional method step is performed after the recording step (205), wherein the first coating and/or second coating preferably comprises polyethylene terephthalate (PET) and/or polycarbonate (PC), and wherein the first coating and/or second coating more preferably is applied during a lamination procedure at a temperature from 10 °C to 130 °C in an autoclave or wherein the first coating and/or second coating more preferably is applied during a lamination procedure at a temperature from 10 °C to 50 °C without an autoclave.

12. Laminated holographic display (100) obtainable by a method (200) according to any one of claims 1 to 11.

13. Laminated holographic display (100) comprising:
- a first glass layer (113);
- a second glass layer (115);
- a recorded photopolymer film layer (117, 117-2) comprising a hologram (111), wherein the recorded photopolymer film layer (117, 117-2) is arranged between the first glass layer (113) and the second glass layer (115),
- a polymer film layer (119), which is arranged between the recorded photopolymer film layer (117, 117-2) and the second glass layer (115); and
- an additional film layer (121, 127), which is arranged between the recorded photopolymer film layer (117, 117-2) and the first glass layer (113).

14. Laminated holographic display (100) according to claim 13, wherein the additional film layer (121, 127) is an optically transparent adhesive layer (121), preferably a silicone-based optically transparent adhesive layer (121) or an additional polymer film layer (127), preferably comprising polyvinyl butyral (PVB), ethylene vinyl acetate (EVA) and/or polyurethane (PU).

## Patentansprüche

1. Verfahren (200) zur Herstellung eines laminierten holographischen Displays (100), umfassend die folgenden Schritte:
- Bereitstellen (201) eines Displayvorläufers (100-1), wobei der Displayvorläufer (100-1) eine erste Glasschicht (113), eine zweite Glasschicht (115), eine nicht belichtete Photopolymerfilmschicht (117, 117-1), die zwischen der ersten Glasschicht (113) und der zweiten Glasschicht (115) angeordnet ist, und eine Polymerfilmschicht (119) umfasst, die zwischen der nicht belichteten Photopolymerfilmschicht (117, 117-1) und der zweiten Glasschicht (115) angeordnet ist, wobei der Bereitstellungsschritt (201) in Abwesenheit von Umgebungslicht durchgeführt wird;
- Laminieren (203) des Displayvorläufers (100-1), um ein Displaylaminat (100-2) zu erhalten, wobei der Laminierungsschritt (203) in Abwesenheit von Umgebungslicht durchgeführt wird; und
- Aufzeichnen (205) eines Hologramms (111) in dem Displaylaminat (100-2) durch Einwirken eines Lichtstrahls auf die nicht belichtete Photopolymerfilmschicht (117, 117-1) des Displaylaminats (100-2), um eine belichtete Photopolymerfilmschicht (117, 117-2) zu erhalten, welche das Hologramm (111) umfasst, wobei der Aufzeichnungsschritt (205) in Abwesenheit von Umgebungslicht durchgeführt wird,
wobei der Displayvorläufer (100-1) eine zusätzliche Polymerfilmschicht (127) oder optisch transparente Klebeschicht (121) umfasst, die zwischen der Photopolymerfilmschicht (117, 117-1, 117-2) und dem ersten Glas (113) angeordnet ist.

2. Verfahren (200) nach Anspruch 1, wobei der Laminierungsschritt (203) bei einer Temperatur von 50 °C bis 130 °C und/oder einem Druck von 1 bar bis 16 bar durchgeführt wird, und wobei der Laminierungsschritt (203) vorzugsweise in einem Autoklaven durchgeführt wird.

3. Verfahren (200) nach Anspruch 1 oder 2, wobei die optisch transparente Klebeschicht (121) Klebstoff auf Silikonbasis umfasst, und wobei die Dicke der optisch transparenten Klebeschicht (121) vorzugsweise von 20 µm bis 50 µm beträgt.

4. Verfahren (200) nach einem der Ansprüche 1 bis 3, wobei die mindestens eine Polymerfilmschicht (119, 127) Polyvinylbutyral (PVB), Ethylenvinylacetat (EVA) und/oder Polyurethan (PU) umfasst, und wobei die Dicke der mindestens einen Polymerfilmschicht (119, 127) vorzugsweise von 380 µm bis 1500 µm, weiter bevorzugt von 380 µm bis 760 µm beträgt.

5. Verfahren (200) nach einem der Ansprüche 1 bis 4, wobei die Photopolymerfilmschicht (117, 117-1, 117-2) einen Photopolymerfilm (123) und eine Substratschicht (125) umfasst, wobei die Substratschicht (125) zwischen der Polymerfilmschicht (119) und dem Photopolymerfilm (123) angeordnet ist.

6. Verfahren (200) nach Anspruch 5, wobei die Photopolymerfilmschicht (117, 117-1, 117-2) eine zusätzliche Substratschicht (129) umfasst, wobei die zusätzliche Substratschicht (129) zwischen dem Photopolymerfilm (123) und der zusätzlichen Polymerfilmschicht (127) angeordnet ist.

7. Verfahren (200) nach Anspruch 5 oder 6, wobei die Substratschicht (125) und/oder zusätzliche Substratschicht (129) Polyamid (PA), Cellulosetriacetat (TAC) und/oder Polyethylenterephthalat (PET), vorzugsweise Polyamid (PA), umfasst, und wobei der Photopolymerfilm (123) vorzugsweise vernetztes Polyurethan (PU) umfasst.

8. Verfahren (200) nach einem der Ansprüche 5 bis 7, wobei die Dicke der Substratschicht (125) und/oder der zusätzlichen Substratschicht (129) von 35 µm bis 60 µm, bevorzugt 60 µm beträgt und/oder wobei die Dicke des Photopolymerfilms (123) von 8 µm bis 18 µm, bevorzugt 15 µm beträgt.

9. Verfahren (200) nach einem der Ansprüche 1 bis 8, wobei der Laminierungsschritt (203) in einem Autoklaven durchgeführt wird, wobei das Verfahren (200) den zusätzlichen Verfahrensschritt umfasst, Abdunkeln des Inneren des Autoklaven vor dem Laminierungsschritt (203), um den Laminierungsschritt (203) in Abwesenheit von Umgebungslicht durchzuführen.

10. Verfahren (200) nach einem der Ansprüche 1 bis 9, wobei während des Laminierungsschritts (203) die Beleuchtungsstärke des Umgebungslichts an dem Displayvorläufer (100-1) unter 0,5 Lux beträgt, bevorzugt unter 0,05 Lux, weiter bevorzugt unter 0,005 Lux und/oder wobei während des Belichtungsschritts (205) die Beleuchtungsstärke des Umgebungslichts an dem Displaylaminat (100-2) unter 0,5 Lux beträgt, bevorzugt unter 0,05 Lux, weiter bevorzugt unter 0,005 Lux.

11. Verfahren (200) nach einem der Ansprüche 1 bis 10, wobei das Verfahren (200) einen zusätzlichen Verfahrensschritt umfasst, Aufbringen einer ersten Beschichtung auf eine Außenfläche der ersten Glasschicht (113) und/oder Aufbringen einer zweiten Beschichtung auf einer Außenfläche der zweiten Glasschicht (115), wobei der zusätzliche Verfahrensschritt nach dem Belichtungsschritt (205) durchgeführt wird, wobei die erste Beschichtung und/oder zweite Beschichtung bevorzugt Polyethylenterephthalat (PET) und/oder Polycarbonat (PC) umfasst, und wobei die erste Beschichtung und/oder zweite Beschichtung weiter bevorzugt während eines Laminierungsverfahrens bei einer Temperatur von 10 °C bis 130 °C in einem Autoklaven aufgebracht wird oder wobei die erste Beschichtung und/oder zweite Beschichtung weiter bevorzugt während eines Laminierungsverfahrens bei einer Temperatur von 10 °C bis 50 °C ohne einen Autoklaven aufgebracht wird.

12. Laminiertes holographisches Display (100), erhaltbar durch ein Verfahren (200) gemäß einem der Ansprüche 1 bis 11.

13. Laminierte holographisches Display (100), umfassend:
- eine erste Glasschicht (113);
- eine zweite Glasschicht (115);
- eine belichtete Photopolymerfilmschicht (117, 117-2), umfassend ein Hologramm (111), wobei die belichtete Photopolymerfilmschicht (117, 117-2) zwischen der ersten Glasschicht (113) und der zweiten Glasschicht (115) angeordnet ist,
- eine Polymerfilmschicht (119), die zwischen der belichteten Photopolymerfilmschicht (117, 117-2) und der zweiten Glasschicht (115) angeordnet ist; und
- eine zusätzliche Filmschicht (121, 127), die zwischen der belichteten Photopolymerfilmschicht (117, 117-2) und der ersten Glasschicht (113) angeordnet ist.

14. Laminiertes holographisches Display (100) nach Anspruch 13, wobei die zusätzliche Filmschicht (121, 127) eine optisch transparente Klebeschicht (121), bevorzugt eine optisch transparente Klebeschicht (121) auf Silikonbasis oder eine zusätzliche Polymerfilmschicht (127), bevorzugt umfassend Polyvinylbutyral (PVB), Ethylenvinylacetat (EVA) und/oder Polyurethan (PU), ist.

## Revendications

1. Procédé (200) pour produire un affichage holographique stratifié (100), comprenant les étapes qui suivent :
- la fourniture (201) d'un précurseur d'affichage (100 - 1), dans lequel le précurseur d'affichage (100 - 1) comprend une première couche en verre (113), une seconde couche en verre (115), une couche en un film photopolymérique non enregistrée (117, 117 - 1), laquelle est agencée entre la première couche en verre (113) et la seconde couche en verre (115), et une couche en un film polymérique (119), laquelle est agencée entre la couche en un film photopolymérique non enregistrée (117, 117 - 1) et la seconde couche en verre (115), dans lequel l'étape de fourniture (201) est réalisée en l'absence de lumière ambiante ;
- la stratification (203) du précurseur d'affichage (100 - 1) afin d'obtenir un stratifié d'affichage (100 - 2), dans lequel l'étape de stratification (203) est réalisée en l'absence de lumière ambiante ; et
- l'enregistrement (205) d'un hologramme (111) dans le stratifié d'affichage (100 - 2) en appliquant un faisceau lumineux sur la couche en un film photopolymérique non enregistrée (117, 117 - 1) du stratifié d'affichage (100 - 2) afin d'obtenir une couche en un film photopolymérique enregistrée (117, 117 - 2) qui comprend l'hologramme (111), dans lequel l'étape d'enregistrement (205) est réalisée en l'absence de lumière ambiante ;
dans lequel le précurseur d'affichage (100 - 1) comprend une couche en un film polymérique additionnelle (127) ou une couche adhésive optiquement transparente (121), laquelle est agencée entre la couche en un film photopolymérique (117, 117 - 1, 117 - 2) et la première couche en verre (113).

2. Procédé (200) selon la revendication 1, dans lequel l'étape de stratification (203) est réalisée à une température entre 50 °C et 130 °C et/ou à une pression entre 1 bar et 16 bars, et dans lequel l'étape de stratification (203) est de préférence réalisée dans un autoclave.

3. Procédé (200) selon la revendication 1 ou 2, dans lequel la couche adhésive optiquement transparente (121) comprend un adhésif à base de silicone, et dans lequel l'épaisseur de la couche adhésive optiquement transparente (121) est de préférence entre 20 µm et 50 µm.

4. Procédé (200) selon l'une quelconque des revendications 1 à 3, dans lequel l'au moins une couche en un film polymérique (119, 127) comprend du polyvinyle butyral (PVB), de l'éthylène - acétate de vinyle (EVA) et/ou du polyuréthane (PU), et dans lequel l'épaisseur de l'au moins une couche en un film polymérique (119, 127) est de préférence entre 380 µm et 1 500 µm de façon davantage préférable, entre 380 µm et 760 µm.

5. Procédé (200) selon l'une quelconque des revendications 1 à 4, dans lequel la couche en un film photopolymérique (117, 117 - 1, 117 - 2) comprend un film photopolymérique (123) et une couche de substrat (125), dans lequel la couche de substrat (125) est agencée entre la couche en un film polymérique (119) et le film photopolymérique (123).

6. Procédé (200) selon la revendication 5, dans lequel la couche en un film photopolymérique (117, 117 - 1, 117 - 2) comprend une couche de substrat additionnelle (129), dans lequel la couche de substrat additionnelle (129) est agencée entre le film photopolymérique (123) et la couche en un film polymérique additionnelle (127).

7. Procédé (200) selon la revendication 5 ou 6, dans lequel la couche de substrat (125) et/ou la couche de substrat additionnelle (129) comprennent/comprend du polyamide (PA), du triacétate de cellulose (TAC) et/ou du téréphtalate de polyéthylène (PET), de préférence du polyamide (PA), et dans lequel le film photopolymérique (123) comprend de préférence un polyuréthane (PU) réticulé.

8. Procédé (200) selon l'une quelconque des revendications 5 à 7, dans lequel l'épaisseur de la couche de substrat (125) et/ou de la couche de substrat additionnelle (129) est entre 35 µm et 60 µm, de préférence, elle est de 60 µm, et/ou dans lequel l'épaisseur du film photopolymérique (123) est entre 8 µm et 18 µm, de préférence, elle est de 15 µm.

9. Procédé (200) selon l'une quelconque des revendications 1 à 8, dans lequel l'étape de stratification (203) est réalisée dans un autoclave, dans lequel le procédé (200) comprend l'étape de procédé additionnelle constituée par l'obscurcissement de l'intérieur de l'autoclave avant l'étape de stratification (203) afin de réaliser l'étape de stratification (203) en l'absence de lumière ambiante.

10. Procédé (200) selon l'une quelconque des revendications 1 à 9, dans lequel, pendant l'étape de stratification (203), l'éclairage en termes de lumière ambiante au niveau du précurseur d'affichage (100 - 1) est inférieur à 0,5 lux, de préférence inférieur à 0,05 lux, de façon davantage préférable, inférieur à 0,005 lux et/ou dans lequel, pendant l'étape d'enregistrement (205), l'éclairage en termes de lumière ambiante au niveau du stratifié d'affichage (100 - 2) est inférieur à 0,5 lux, de préférence inférieur à 0,05 lux, de façon davantage préférable, inférieur à 0,005 lux.

11. Procédé (200) selon l'une quelconque des revendications 1 à 10, dans lequel le procédé (200) comprend une étape de procédé additionnelle constituée par l'application d'un premier revêtement sur une surface externe de la première couche en verre (113) et/ou par l'application d'un second revêtement sur une surface externe de la seconde couche en verre (115), dans lequel l'étape de procédé additionnelle est réalisée après l'étape d'enregistrement (205), dans lequel le premier revêtement et/ou le second revêtement comprennent/comprend de préférence du téréphtalate de polyéthylène (PET) et/ou du polycarbonate (PC), et dans lequel le premier revêtement et/ou le second revêtement sont/est de façon davantage préférable appliqué(s) pendant une procédure de stratification à une température entre 10 °C et 130 °C dans un autoclave ou dans lequel le premier revêtement et/ou le second revêtement sont/est de façon davantage préférable appliqué(s) pendant une procédure de stratification à une température entre 10 °C et 50 °C sans autoclave.

12. Affichage holographique stratifié (100) pouvant être obtenu au moyen d'un procédé (200) selon l'une quelconque des revendications 1 à 11.

13. Affichage holographique stratifié (100) comprenant :
- une première couche en verre (113) ;
- une seconde couche en verre (115) ;
- une couche en un film photopolymérique enregistrée (117, 117 - 2) qui comprend un hologramme (111), dans lequel la couche en un film photopolymérique enregistrée (117, 117 - 2) est agencée entre la première couche en verre (113) et la seconde couche en verre (115) ;
- une couche en un film polymérique (119), laquelle est agencée entre la couche en un film photopolymérique enregistrée (117, 117 - 2) et la seconde couche en verre (115) ; et
- une couche en un film additionnelle (121, 127), laquelle est agencée entre la couche en un film photopolymérique enregistrée (117, 117 - 2) et la première couche en verre (113).

14. Affichage holographique stratifié (100) selon la revendication 13, dans lequel la couche en un film additionnelle (121, 127) est une couche adhésive optiquement transparente (121), de préférence une couche adhésive optiquement transparente à base de silicone (121) ou une couche en un film polymérique additionnelle (127), qui comprend de préférence du polyvinyle butyral (PVB), de l'éthylène - acétate de vinyle (EVA) et/ou du polyuréthane (PU).
